Europäisches Patentamt

European Patent Office

Office européen des brevets

(11) Veröffentlichungsnummer: **0 234 310**
**A2**

(12) **EUROPÄISCHE PATENTANMELDUNG**

(21) Anmeldenummer: **87101112.8**

(22) Anmeldetag: **27.01.87**

(51) Int. Cl.⁴: **F16F 9/44** , F16F 9/30 , F16L 3/16 , E04B 1/36

(30) Priorität: **28.02.86 DE 3606686**

(43) Veröffentlichungstag der Anmeldung:
**02.09.87 Patentblatt 87/36** .

(84) Benannte Vertragsstaaten:
**AT CH DE FR GB IT LI**

(71) Anmelder: **AROS Hydraulik GmBH**
**Föhrenweg 7**
**D-8940 Memmingen(DE)**

(72) Erfinder: **Pacht, Horst**
**Friedhofsweg 17**
**D-6108 Weiterstadt 1(DE)**

(74) Vertreter: **Patentanwälte Dr. Solf & Zapf**
**Zeppelinstrasse 53**
**D-8000 München 80(DE)**

(54) **Viskosedämpfer für eine Schwingungsisolierungsvorrichtung.**

(57) Viskosedämpfer für eine Schwingungsisolierungsvorrichtung, insbesondere zur Schwingungsisolierung von Maschinen und Gebäuden, mit einem eine viskose Masse enthaltenen geschlossenen Topf, in den ein den Dämpfungshub aufnehmender Stößel mit einem Kolbenelement eintaucht, wobei der aus dem Topf ragende Stößelkopf an dem einen und der Topf an dem anderen der beiden zur Schwingungsisolierung auf Abstand zu haltenden Körper befestigbar sind, wobei der Stößel eine Kolbenscheibe (31) mit mindestens einer Durchströmöffnung für die viskose Masse aufweist und im Topf ein von außen verstellbares Mittel zum zumindest teilbereichsweisen Verschließen der Durchströmöffnung angeordnet ist.

Fig. 1

EP 0 234 310 A2

## Viskosedämpfer für eine Schwingungsisolierungsvorrichtung

Die Erfindung betrifft einen Viskosedämpfer, der zur Schwingungsisolierung von Maschinen dient.

Zur Schwingungsisolierung von Maschinen werden Federkörper und Viskosedämpfer verwendet. Dabei werden die Federkörper und Viskosedämpfer, nebeneinander angeordnet, z.B. zwischen einem Fundament und einer Maschine eingebaut. Viskosedämpfer arbeiten mit einem in eine hochviskose Flüssigkeit tauchenden, in einem geschlossenen Topf angeordneten Stempel. Die Viskosität der Flüssigkeit ist von der Temperatur abhängig, so daß Viskosedämpfer, die erheblichen Temperaturschwankungen ausgesetzt sind, mit Temperaturmessern und Temperaturreglern ausgerüstet werden müssen. Es ist bekannt, daß die Wirkung der Dämpfung durch Veränderung der Eintauchtiefe des Stempels geregelt werden kann, um sie an besondere Erfordernisse anzupassen. Es ist auch vorgeschlagen worden, die Viskosedämpfer gegebenenfalls mit einer Vorrichtung auszurüsten, die es gestattet, die Dämpfung während des Betriebes einzuregulieren.

Die Viskosedämpfer haben meist die Aufgabe, die Amplituden der Durchfahrresonanzen (Hoch- und Runterlauf) zu begrenzen. Diese Dämpfung ist aber nur periodisch erforderlich. Die Federkörper wirken schwingungsisolierend und sind beim Betrieb der Maschinen in der Regel dauernd beansprucht. Die bekannten Viskosedämpfer werden beim Betrieb der Maschine ebenfalls dauernd angesprochen, weil die Schwingungen der Maschine auch auf das Viskosedämpfungssystem einwirken. Das Dämpfungssystem der Viskosedämpfer stört aber das Schwingungssystem der Federkörper, so daß letztere ihre Wirksamkeit nur unvollkommen entfalten können.

Aufgabe der Erfindung ist, eine einfache Möglichkeit einer genauen Regulierung der Dämpfungswirkung zu schaffen und dabei auch die durch die Viskosedämpfer verursachte Störung des Schwingungssystems der Federkörper zu verhindern.

Diese Aufgabe wird durch die Merkmale des Hauptanspruchs gelöst. Vorteilhafte Weiterbildungen der Erfindung werden in den Unteransprüchen gekennzeichnet.

Der erfindungsgemäße Viskosedämpfer ist aufgrund seiner Konstruktion und Einstellung nicht ständig im Eingriff und erst beim Überschreiten vorgegebener Systemamplituden tritt er in Wirkung. Diese vorgegebenen Grenzamplituden sind ohne Schwierigkeit für die Auf-und Abwärtsbewegung im μm-Bereich genau einstellbar. Die Grenzamplituden vom Maschinen-Fundamentsystem sind stufenlos und frei wählbar anzupassen.

Sämtliche unzulässigen Bewegungen (im dreiachsigen Koordinatensystem gesehen) werden auf zulässige vorgegebene Amplituden begrenzt. Der Viskosedämpfer ist hierdurch nicht permanent, sondern nur beim Überschreiten der Grenzamplituden im Eingriff. Hierdurch wird jeglicher nachteiliger Einfluß der Dämpfung auf die Wirkung der Federkörper vermieden.

Der neue Viskosedämpfer ist, bedingt durch seine Konstruktion, geeignet, sämtliche Bewegungen des Maschinen-Fundamentsystems zu dämpfen. Hierbei sind Bewegungen in den sechs Freiheitsgraden gemeint, die sich konstruktiv bedingt stets auf die vertikale Dämpferwirkrichtung reduzieren.

Die Dämpferkräfte sind während des Betriebes und auch im eingebauten Zustand von außen stufenlos einstellbar und somit auf jeden Einzelfall ohne großen Aufwand abzustimmen. Die eingefüllte Menge der viskosen Flüssigkeit bleibt in ihrer Viskosität stets konstant. Sollte sich diese z.B. bei hochbeanspruchten Pressensystemen während des Betriebes durch den Temperatureinfluß ändern, so kann von außen ein Anpassen an die neuen Verhältnisse leicht vorgenommen werden. Sämtliche Dämpferparameter sind frei variabel und auf jeden Einzelfall sicher abzustimmen.

Der Viskosedämpfer, der z.B. jeweils an den vier Ecken des abgefederten Fundamentblockes als indirekte Verbindung zwischen dem freischwingenden Fundamentoberteil (oberhalb der Federkörper) und dem unbeweglicheren und meistens im Baugrund verlagerten Fundamentunterteil eingebaut ist, stellt im Regelfall keine direkte mechanische Verbindung dar. Am Fundamentunterteil befindet sich fest mit dem Boden verankert - (Ankerschrauben) der eigentliche Dämpfertopf mit dem Dämpfmedium. In den Topf hinein taucht ein - scheibenförmiger Kolben, dessen Kolbenfläche mit einer Reihe von Bohrungen versehen ist. Wird dieser Kolben vertikal im Dämpfertopf bewegt, so strömt wechselseitig Dämpfmedium durch die Bohrungen der Kolbenfläche.

Diese Bohrungssegmente können durch eine zweite von außen verstellbare Regulierungsscheibe teilweise oder auch ganz abgedeckt werden. Der Durchströmungsquerschnitt kann somit zwischen einem minimalen und einem maximalen Durchlaß variiert werden.

Die Verstellung der Durchlaßfläche und auch der genauen Vertikalpositionierung kann im eingebauten Zustand vorgenommen werden. Sämtliche beweglichen Teile werden über entsprechende Einrichtungen vom Dämpfmedium geschmiert.

Der nach oben zum beweglichen Fundamentteil reichende Stößel des eigentlichen Kolbens berührt im eingebauten Zustand das obere, freischwingende Fundamentteil nicht. Es besteht wegen eines nach oben und unten exakt einstellbaren Luftspaltes(im μm-Bereich) mechanisch kein Kontakt.

Das Ende der Kolbenstange bzw. des Stößels besitzt einen Kopf z.B. aus einem Elastomer oder einem ähnlichen Werkstoff. Dieser Kopf kann auf den gewünschten Luftspalt nach oben und unten eingestellt werden. Überschreiten die Fundamentamplituden während der einzelnen Durchfahrresonanzen den eingestellten Luftspalt (entspricht Amplitudenbereich), so kommt es zu einem elastischen Anstoßen nach oben oder unten. Wird der Stößelkopf elastisch verformt und die Federung in beiden Richtungen überschritten, so wird der Stößel und somit der Kolben im Dämpfertopf auf- und abwärts bewegt, wodurch, bedingt durch die natürliche Dämpferkraft, die Fundamentamplituden innerhalb weniger Perioden auf den zulässigen - (eingestellten) Bereich reduziert werden.

Anhand des in der Zeichnung abgebildeten Beispiels wird die Erfindung im folgenden näher erläutert. Es zeigen:

Fig. 1 einen Längsschnitt durch den Viskosedämpfer,

Fig. 2 eine Draufsicht auf die Steuerscheibe,

Fig. 3 eine Draufsicht auf die Kolbenscheibe.

Der Viskosedämpfer weist einen Topf 1 mit einem Deckel 2 und einem Boden 3 sowie einen Topfmantel 4 auf. Der Deckel 2 ist z.B. mit Schrauben an einem Flansch 5 des Topfmantels 4 lösbar befestigt. Der Boden 3 weist Haltemittel auf, z.B. einen Rand 6 oder dgl., mit dem der Viskosedämpfer direkt oder indirekt am Fundament 68 befestigt wird (nicht dargestellt).

Im Innenraum 7 des Topfes 1 befindet sich eine viskose Masse (nicht dargestellt). Zentral zur vertikalen Mittelachse 8 des Topfes 1 weist der Deckel 2 ein Loch 9 auf, in das formschlüssig eine zylindrische Führungsbuchse 11 mit einem zentralen Durchgang mit einer Mantelfläche 12 eingesetzt ist. Die Führungsbuchse 11 liegt mit ihrem Rand 10 außen auf dem Deckel 2 auf und ist dort mit dem Deckel 2 verschraubt. Sie ragt ein Stück in den Innenraum 7. Ihr Durchgang wird von einer Führungshülse 13 durchgriffen, die formschlüssig zumindest teilbereichsweise an der Mantelfläche

12 der Führungsbuchse 11 anliegt und nach oben aus der Führungsbuchse 11 bzw. aus dem Topf 1 und im Innenraum 7 nach unten aus der Führungsbuchse 11 ein Stück herausragt.

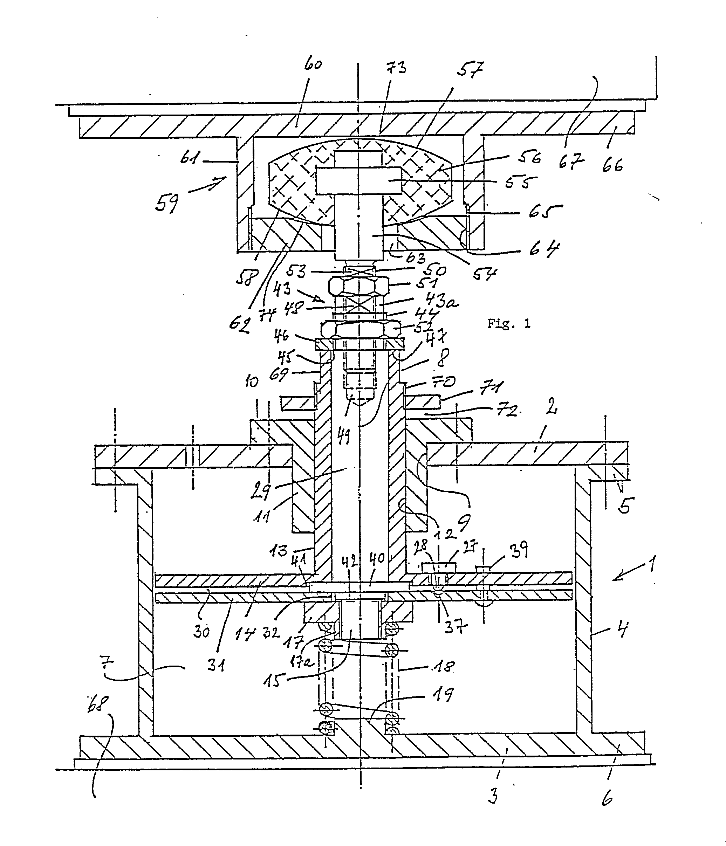

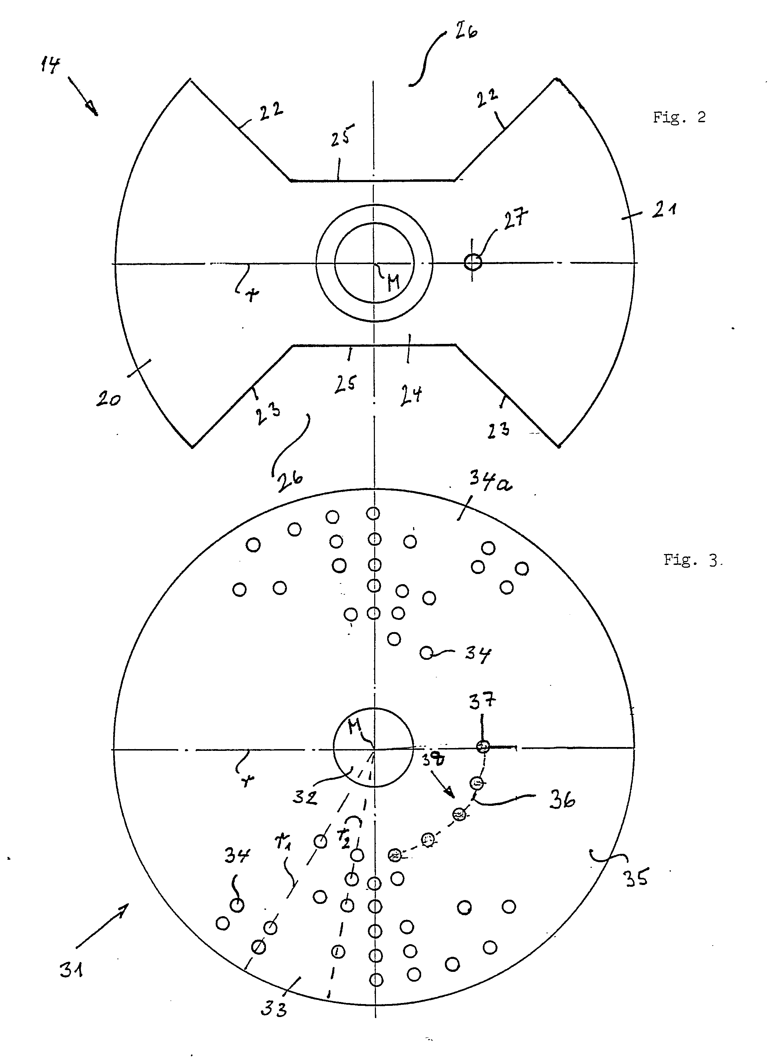

Im freien unteren Endbereich der Führungshülse 13 ist eine sich senkrecht zur Mittelachse 8 und vom Außenmantel der Führungshülse 13 zur Innenwandung des Topfmantels 4 erstreckende Steuerscheibe 14 fest angeordnet. Die Raumform der Steuerscheibe 14 ist in Fig. 2 abgebildet. Sie weist zwei sich gegenüberliegende Kreissektorstücke 20, 21 mit jeweils zwei Radiuskanten 22, 23 auf. Die Radiuskanten 22, 23 erstrecken sich längs eines Radius und konvergieren entsprechend und würden sich im Mittelpunkt M treffen und dort vorzugsweise einen Winkel von 90° bilden. Die Kreissektorstücke 20, 21 stehen über einen Verbindungssteg 24 miteinander in Verbindung, dessen Kanten 25 auf die Radiuskanten 23/23 bzw. 22/22 treffen. Die Breite des Verbindungsstegs 24 ist geringer als die Länge des Radius r der Kreissektorstücke, so daß jeweils eine Ausnehmung 26 gebildet wird zwischen den Kanten 23/25/23 und den Kanten 22/25/22. Der Radius r entspricht etwa dem Radius des Topfes 1.

Im Abstand vom Mittelpunkt M ist in einem Kreissektorstück 20, 21 eine Lagerung 27 für eine federnd gelagerte, nach unten aus der Fläche des Kreissektorstücks ragende Rastkugel 28 angeordnet, deren Aufgabe weiter unten erläutert wird.

Unterhalb der Steuerscheibe 14 und im geringen Abstand 30 davon ist eine Kolbenscheibe 31 sich parallel erstreckend angeordnet. Die Kolbenscheibe 31 ist in Fig. 3 in der Draufsicht abgebildet. Sie weist den gleichen Radius r wie die Steuerscheibe 14 und ein zentrales Befestigungsloch 32 auf. In zwei sich gegenüberliegenden Sektorbereichen 33 und 34a, die den Abmessungen der Ausnehmungen 26 in der Steuerscheibe 14 entsprechen, sind mehrere Bohrungen 34 eingebracht, wobei eine oder mehrere Bohrungen 34 auf einer Radiuslinie $r_1$, $r_2$ im Abstand voneinander angeordnet sind. Z.B. sind im Sektorbereich 33 auf der Radiuslinie $r_1$ drei Bohrungen 34 und auf der Radiuslinie $r_2$ vier Bohrungen 34 vorhanden. Dabei ist der Abstand der Bohrungen zum Teil gleich und zum Teil unterschiedlich. Die Bohrungen 34 des Sektorbereichs 34a sind jeweils auf den Radiuslinien des Sektorbereichs 33 gegenüberliegenden Radiuslinien angeordnet, wobei die Anzahl und Verteilung der Bohrungen 34 spiegelsymmetrisch zum Mittelpunkt M vorzugsweise gleich sind.

Des weiteren ist in die Oberfläche 35 der Kolbenscheibe 31 auf einer Kreislinie 36 eine Reihe 38 von mehreren im Abstand voneinander angeordneten, kugelabschnittsförmigen Vertiefungen 37 im radialen Abstand vom Mittelpunkt M eingebracht, die etwa in der Flächenmitte des Sektorbereichs 33 beginnt und sich zum Sektorbereich 34a erstreckt. Der radiale Abstand der Reihe 38 entspricht dem radialen Abstand der Lagerung 27 in der Steuerscheibe 14, wobei die Vertiefungen 37 mit der Kugel 28, wie weiter unten erläutert wird, zusammenwirken.

Im radialen Abstand vom Mittelpunkt M ist zudem in der Kolbenscheibe 31 ein Anschlagstift 39 angeordnet, der aus der Oberfläche 35 nach oben ragt und für eine der Kanten 22, 23 der Steuerscheibe 14 als Anschlag fungiert.

Die Lagerung der Kolbenscheibe 31 ergibt sich aus Fig. 1. Die Führungshülse 13 wird von einem zylindrischen Bolzen 29 durchgriffen. Der Bolzen 29 weist im unteren Endbereich einen Flanschring 40 auf, der seitlich unter die Führungshülse 13 greift und in einer ringförmigen Ausnehmung 41 geringer Tiefe an der Unterseite der Steuerscheibe 14 lagert.

Unterhalb des Flanschrings 40 setzt sich der Bolzen 29 mit einem Ringsteg 42 fort, der in das Befestigungsloch 32 der Kolbenscheibe 31 greift, wobei sein Durchmesser etwas kleiner ist als der Durchmesser des Lochs 32 und seine Dicke etwas geringer ist als die Dicke der Kolbenscheibe 31. Unterhalb des Ringstegs 42 endet der Bolzen 29 mit einem Gewindezapfen 15. Eine Mutter 17 ist von unten auf den Gewindezapfen 15 gegen die Kolbenscheibe 31 geschraubt, die gegen die Unterseite des Flanschrings 40 gedrückt wird. Der Gewindezapfen 15 ragt noch ein Stück aus der Mutter 17 und bildet ein Führungszapfenstück zur Abstützung einer zylindrischen Schraubendruckfeder 18, in die er ein Stück hineinragt und die zentral zwischen der Kolbenscheibe 31 und dem Boden 3 des Topfes 1 angeordnet ist, wobei auf dem Boden 3 als Führungselement ein Zapfenstumpf 19 angeordnet ist, der ebenfalls in die Schraubendruckfeder 18 ragt. Die Funktion der Schraubenfeder 18 wird weiter unten erläutert.

Zweckmäßig ist, die Mutter 17 mit einem nach unten ragenden Schaft 17a auszubilden, der auch noch auf dem Gewindezapfen 15 sitzt und als Stützelement für die Feder 18 dient.

Aus der Führungshülse 13 ragt nach oben ein weiterer Gewindezapfen 43 mit einem Gewinde 44, das ein Stück vor dem freien Ende des Gewindezapfens 43 endet, so daß ein Endstück 43a gebildet wird. Der Durchmesser des Gewindezapfens 43 ist etwas kleiner als der Durchmesser des Bolzens 29, so daß eine Ringkante 45 gebildet wird. Auf der Ringkante 45 lagert ein kreisringförmiger Deckel 46, der sich auch über die freie Hülsenendkante 47 erstreckt. Von oben ist gegen den Deckel 46 eine Flachmutter 52 geschraubt, so daß der Bolzen 29 oben durch den Deckel 46 und unten durch den Flanschring 40 gegen die Hülse 13 abgestützt befestigt ist. Auf der Mantelfläche des Endstücks 43a ist mindestens eine Schlüsselfläche 48 vorgesehen, deren Zweck weiter unten erläutert wird.

Wesentlich ist, daß in den Bolzen 29 zentral von oben eine Sackbohrung 49 mit Innengewinde eingebracht ist. In die Bohrung 49 ist ein Gewindebolzen 50 eingeschraubt, wobei eine Kontermutter 51 gegen das Endstück 43a des Bolzens 29 geschraubt ist und das aus der Kontermutter 51 nach oben herausragende Endstück des Gewindebolzens 50 mindestens eine Schlüsselfläche 53 aufweist.

Oberhalb des Gewindeendstücks setzt sich der Gewindebolzen 50 mit einem verbreiterten Kopfstück 54 fort, das im oberen Endbereich einen Ringsteg 55 trägt. Das Kopfstück 54 ist von einem im Querschnitt (Fig. 1) ellipsoidförmigen Puffer 56 umgeben, der eine obere Ellipsoidfläche 57 und eine untere Ellipsoidfläche 58 aufweist. Der Pufferkörper 56 besteht aus einem elastischen Material z.B. PVC oder Gummi und ist in einem z.B. runden Gehäuse 59 angeordnet, das eine Deckenwandung 60, einen Mantel 61 und einen Boden 62 mit einem zentralen Loch 63 aufweist. Der Boden 62 ist mit einem Außengewinde 64 in ein auf der Innenfläche des Mantels 61 angeordnetes Innengewinde 65 eingeschraubt, wobei das Innengewinde 65 vorzugsweise breiter ist, als die Dicke des Bodens 62 beträgt.

Das Gehäuse 59 ist z.B. am Boden 67 einer Maschine oder Schwingfundamentes befestigt - (nicht dargestellt), wozu ein seitlicher Deckensteg 66 dienen kann. Das zentrale Loch 63 des Gehäuses 59 wird vom verbreiterten Kopfstück 54 frei durchgriffen.

Unterhalb des Deckels 46 ist in der Außenmantelfläche der Hülse 13 mindestens eine Schlüsselfläche 69 angebracht. Im Anschluß daran nach unten trägt die Außenmantelfläche der Hülse 13 ein Außengewinde 70, auf das eine ein Innengewinde tragende Ringscheibe 71 geschraubt ist, wobei noch ein Spalt 72 zwischen der Ringscheibe 71 und dem Flanschring 10 der Führungsbuchse 11 verbleibt.

Nach der Erfindung wesentlich ist, daß beim eingebauten Viskosedämpfer ein Spalt 73 zwischen der Ellipsoidfläche 57 und der Innenfläche der Deckenwandung 60 und ein Spalt 74 zwischen der Ellipsoidfläche 58 und der Innenfläche des Bodens 62 verbleiben. Der Spalt 74 ist einstellbar durch die Verschraubung des Bodens 62 nach oben oder unten. Der Spalt 73 kann eingestellt werden, indem die Kontermutter 51 gelöst wird und der Gewindebolzen 50 mit einem an die Schlüsselflächen 53 an greifenden Werkzeug aus dem festgehaltenen Bolzen 29 heraus oder in den Bolzen 29 hineingeschraubt wird. Anschließend wird die Kontermutter 51 wieder angezogen.

Nach einem weiteren Merkmal der Erfindung kann die Breite des Spalts 72 verändert werden, indem die Ringscheibe 71 auf der Hülse 13 nach oben oder unten geschraubt wird. Der Spalt 72 begrenzt den Bewegungsspielraum für den Dämpfhub.

Schließlich kann erfindungsgemäß die Hülse 13 relativ zum Bolzen 29 um die Achse 8 gedreht werden, wenn die Flachmutter 52 bei Festhalten des Bolzens mit einem an den Schlüsselflächen 48 angreifenden Werkzeug gelöst und ein Stück nach oben geschraubt wird. Dadurch wird die Hülse 13 verschiebbar auf dem Bolzen 29. Mit einem an die Schlüsselflächen 69 greifenden Werkzeug kann die Hülse verdreht werden, wenn der Bolzen 29 an den Schlüsselflächen 48 gehalten wird. Beim Verdrehen der Hülse rastet die Kugel 28 aus der jeweiligen Vertiefung 37 aus, bis sie durch das Verdrehen eine andere Vertiefung 37 findet. Mit der Verdrehung der Hülse 13 wird auch die darin festsitzende Steuerscheibe 14 verdreht und verdeckt je nach ihrer Stellung mehr oder weniger Bohrungen 34 der zwischen dem Flanschring 40 und der Mutter 17 eingeklemmten Kolbenscheibe 31. Der Anschlag 39 begrenzt die mögliche Verdrehung der Hülse 13. Da die Kanten 22, 23 sich radial erstrecken, können sie jeweils eine Bohrungsreihe auf einer Radiuslinie $r_1$, $r_2$ abdecken, wobei die Abstände zwischen den Vertiefungen 37 dem Abstand einer Radiuslinie entsprechen.

Der erfindungsgemäße Viskosedämpfer ist aufgrund der Luftspalte 73 und 74 nicht ständig im Eingriff, so daß keine beachtliche Beeinträchtigung der Federkörper verursacht wird. Die Spalte 73 und 74 können genau von außen eingestellt werden, so daß eine Anpassung an die jeweiligen Erfordernisse möglich ist. Die Spalte 73 und 74 fangen die Amplituden bis zu bestimmten Grenzamplituden ab. Erst wenn diese Grenzamplituden überschritten werden, tritt die Wirkung des Viskosedämpfers in Kraft. Die Größe der Dämpferkraft ist durch die Veränderbarkeit der Durchströmfläche in der Kolbenscheibe einstellbar, und zwar ebenfalls im eingebauten Zustand des Viskosedämpfers. Der Viskosedämpfer kann somit auf den jeweiligen Bedarfsfall eingestellt werden. Es ist kein Auswechseln des Dämpfmediums oder Konstanthaltung der Viskosität des Dämpfmediums notwendig.

Die Feder 18 hat die Aufgabe, das Gewicht der Stößelvorrichtung zu tragen und deren Bewegung aufzunehmen. Sie hält die Kolbenscheibe 31 immer in derselben Höhe im Topf 1, so daß die Luftspalte 73, 74 sowie der Bewegungsspielraum 72 erhalten bleiben.

Die erfindungsgemäßen Viskosedämpfer eignen sich insbesondere auch zur Verwendung als Anschlagdämpfer und sogenannte Maschinenlager z.B. zur Schwingungsisolierung von Maschinen. Herauszuheben ist außerdem, daß sie sich auch zur Erdbebenisolierung von Gebäuden eignen.

## Ansprüche

1. Viskosedämpfer für eine Schwingungsisolierungsvorrichtung, insbesondere zur Schwingungsisolierung von Maschinen und Gebäuden, mit einem eine viskose Masse enthaltenen geschlossenen Topf, in den ein den Dämpfungshub aufnehmender Stößel mit einem Kolbenelement eintaucht, wobei der aus dem Topf ragende Stößelkopf an dem einen und der Topf an dem anderen der beiden zur Schwingungsisolierung auf Abstand zu haltenden Körper befestigbar sind, dadurch gekennzeichnet, daß der Stößel eine Kolbenscheibe (31) mit mindestens einer Durchströmöffnung für die viskose Masse aufweist und im Topf ein von außen verstellbares Mittel zum zumindest teilbereichsweisen Verschließen der Durchströmöffnung angeordnet ist.

2. Viskosedämpfer nach Anspruch 1, dadurch gekennzeichnet, daß das Mittel zum zumindest teilbereichsweisen Verschließen der Durchströmöffnung am Stößel angeordnet ist.

3. Viskosedämpfer nach Anspruch 1 und/oder 2, dadurch gekennzeichnet, daß die Durchströmöffnung von mehreren Bohrungen (34) gebildet wird.

4. Viskosedämpfer nach Anspruch 3, dadurch gekennzeichnet, daß die Bohrungen (34) in zwei sich gegenüberliegenden Sektorbereichen (33, 34a) angeordnet sind.

5. Viskosedämpfer nach Anspruch 3 und/oder 4, dadurch gekennzeichnet, daß eine oder mehrere Bohrungen auf einer Radiuslinie z.B. ($r_1$, $r_2$) im Abstand voneinander angeordnet sind.

6. Viskosedämpfer nach Anspruch 5, dadurch gekennzeichnet, daß die Radiuslinien z.B. ($r_1$, $r_2$) in einem gleichen Abstand voneinander angeordnet sind.

7. Viskosedämpfer nach Anspruch 5 und/oder 6, dadurch gekennzeichnet, daß die Bohrungen auf einer Radiuslinie z.B. ($r_1$ oder $r_2$) im gleichen Abstand voneinander angeordnet sind.

8. Viskosedämpfer nach einem oder mehreren der Ansprüche 3 bis 7, dadurch gekennzeichnet, daß die Bohrungen (34) des Sektorbereichs (34a) jeweils auf den Radiuslinien des Sektorbereichs - (33) gegenüberliegenden Radiuslinien angeordnet sind, wobei vorzugsweise die Anzahl und Verteilung der Bohrungen (34) spiegelsymmetrisch zum Mittelpunkt (M) gleich sind.

9. Viskosedämpfer nach einem oder mehreren der Ansprüche 1 bis 8, **dadurch gekennzeichnet,** daß das Mittel zum zumindest teilbereichs weise Verschließen der Bohrungen (34) aus einer im geringen Stand über der Kolbenscheibe (31) angeordneten Steuerscheibe (14) besteht, die mindestens eine sich radial erstreckende Radiuskante - (22, 23) aufweist.

10. Viskosedämpfer nach Anspruch 9, **dadurch gekennzeichnet,** daß die Steuerscheibe (14) zwei sich gegenüberliegende Kreissektorstücke (20, 21) mit jeweils zwei Radiuskanten - (22, 23) aufweist, wobei die Radiuskanten (22, 23) zum Mittelpunkt (M) hin konvergieren und die Kreissektorstücke (20, 21) über einen Verbindungssteg (24) miteinander in Verbindung stehen.

11. Viskosedämpfer nach Anspruch 10, **dadurch gekennzeichnet,** daß die Kanten (25) des Verbindungsstegs (24) auf die Radiuskanten - (23/23) bzw. (22/22) treffen und die Breite des Verbindungsstegs (24) geringer ist als die Länge des Radius (r) der Kreissektorstücke (20, 21), so daß jeweils eine Ausnehmung (26) gebildet wird zwischen den Kanten (23/25/23) und den Kanten - (22/25/22).

12. Viskosedämpfer nach einem oder mehreren der Ansprüche 1 bis 11, **dadurch gekennzeichnet,** daß der Radius der Steuerscheibe (14) dem Radius der Kolbenscheibe (31) entspricht und beide Radien etwas kleiner sind, als der Radius des Topfes (1) beträgt.

13. Viskosedämpfer nach einem oder mehreren der Ansprüche 9 bis 12, **dadurch gekennzeich net,** daß zwischen der Steuerscheibe (14) und der Kolbenscheibe (31) Rastmittel für die abschnittsweise Verstellung der beiden Scheiben gegeneinander vorhanden sind.

14. Viskosedämpfer nach Anspruch 13, **dadurch gekennzeichnet,** daß die Rastmittel mindestens eine Lagerung (27) in einem der Kreissektorstücke (20, 21) für eine federnd gelagerte, nach unten aus der Fläche des Kreissektorstücks ragende Rastkugel (28) und eine Reihe (38) von mehreren im Abstand voneinander angeordneten kugelabschnittsförmigen Vertiefungen (37) in der Oberfläche (35) der Kolbenscheibe (31) aufweisen, die miteinander korrespondieren.

15. Viskosedämpfer nach einem oder mehreren der Ansprüche 1 bis 14, **dadurch gekennzeichnet,** daß zwischen der Steuerscheibe (14) und der Kolbenscheibe (31) mindestens ein Anschlagmittel vorhanden ist, das die gegenseitige Verdrehung begrenzt.

16. Viskosedämpfer nach Anspruch 15, **dadurch gekennzeichnet,** daß das Anschlagmittel aus einem in der Kolbenscheibe (31) angeordneten Anschlagstift (39) besteht, der aus der Oberfläche - (35) nach oben ragt und für eine der Kanten (22, 23) der Steuerscheibe (14) als Anschlag fungiert.

17. Viskosedämpfer nach einem oder mehreren der Ansprüche 1 bis 16, **dadurch gekennzeichnet,** daß die Kolbenscheibe (31) am Ende eines Bolzens (29) befestigt und die Steuerscheibe (14) am Ende einer vom Bolzen (29) durchgriffenen Führungshülse (13) angeordnet sind, wobei die Führungshülse (13) im Deckel (2) des Topfes (1) axial gleitbar lagert und der Bolzen (29) oder die Hülse (13) relativ zueinander axial verdrehbar angeordnet sind.

18. Viskosedämpfer nach Anspruch 17, **dadurch gekennzeichnet,** daß die Steuerscheibe (14) am freien unteren Ende der Führungshülse - (13) angeordnet ist.

19. Viskosedämpfer nach Anspruch 17 und/oder 18, **dadurch gekennzeichnet,** daß der Bolzen (29) im unteren Endbereich einen Flanschring (40) aufweist, der seitlich unter die Führungshülse (13) greift und in einer ringförmigen Ausnehmung (41) geringfügiger Tiefe an der Unterseite der Steuerscheibe (14) lagert und daß aus der Führungshülse (13) nach oben ein Gewindezapfen (43) mit einem Gewinde (44) ragt, das ein Stück vor dem freien Ende des Gewindezapfens (43) endet, so daß ein Endstück (43a) gebildet wird, der Durchmesser des Gewindezapfens (43) etwas kleiner ist als der Durchmesser des Bolzens (29), so daß eine Ringkante (45) gebildet wird, auf der Ringkante (45) ein kreisringförmiger Deckel (46) lagert, der sich auch über die freie Hülsenendkante (47) erstreckt und von oben gegen den Deckel - (46) eine Flachmutter (52) ge schraubt ist, so daß der Bolzen (29) oben durch den Deckel (46) und unten durch den Flanschring (40) gegen die Hülse (13) abgestützt befestigt ist.

20. Viskosedämpfer nach einem oder mehreren der Ansprüche 17 bis 19, **dadurch gekennzeichnet,** daß unterhalb des Flanschrings (40) sich der Bolzen (29) mit einem Ringsteg (42) fortsetzt, der in ein Befestigungsloch (32) der Kolbenscheibe (31) greift, wobei seine Dicke etwas geringer ist als die Dicke der Kolbenscheibe (31) und daß unterhalb des Ringstegs (42) der Bolzen (29) mit einem Gewindezapfen (15) endet, auf den eine Mutter - (17) von unten gegen die Kolbenscheibe (31) geschraubt ist, die gegen die Unterseite des Flanschrings (40) gedrückt wird.

21. Viskosedämpfer nach einem oder mehreren der Ansprüche 17 bis 20, **dadurch gekennzeichnet,** daß der Gewindezapfen (15) noch ein Stück aus der Mutter (17) nach unten ragt in die Ausnehmung einer zylindrischen Schraubendruckfeder (18), die zentral zwischen der Kolbenscheibe (31) und dem Boden (3) des Topfes (1) angeordnet ist, wobei auf dem Boden (3) als Führungselement ein Zapfenstumpf (19) angeordnet ist , der ebenfalls in die Schraubendruckfeder (18) ragt.

22. Viskosedämpfer nach einem oder mehreren der Ansprüche 17 bis 21, **dadurch gekennzeichnet,** daß der Deckel (2) ein zentrales Loch - (9) aufweist, in das formschlüssig eine zylindrische Führungsbuchse (11) mit einem zentralen Durchgang mit einer Mantelfläche (12) eingesetzt ist und die Führungsbuchse (11) mit ihrem Rand (10) außen auf dem Deckel (2) aufliegt und dort befestigt ist und ein Stück in den Innenraum (7) des Topfes (1) ragt, wobei ihr Durchgang von der Führungshülse (13) durchgriffen wird, die formschlüssig zumindest teilbereichsweise an der Mantelfläche (12) der Führungsbuchse (11) anliegt und nach oben aus der Führungsbuchse (11) bzw. aus dem Topf (1) und im Innenraum (7) nach unten aus der Führungsbuchse (11) ein Stück herausragt.

23. Viskosedämpfer nach einem oder mehreren der Ansprüche 17 bis 22, **dadurch gekennzeichnet,** daß außen am Mantel der Hülse (13) im Abstand von der Oberfläche des Deckels (2) ein Anschlagmittel (71) zur Begrenzung des Dämfhubes angeordnet ist.

24. Viskosedämpfer nach Anspruch 23, **dadurch gekennzeichnet,** daß das Anschlagmittel (71) in der Höhe verstellbar angeordnet ist.

25. Viskosedämpfer nach Anspruch 23 und/oder 24, **dadurch gekennzeichnet,** daß in der aus dem Topf (1) ragenden Außenmantelfläche der Hülse (13) ein Außengewinde (70) angeordnet ist, auf das eine ein Innengewinde tragende Ringscheibe (71) geschraubt ist, wobei noch ein Spalt - (72) zwischen der Ringscheibe (71) und dem Flanschring (10) der Führungsbuchse (11) verbleibt.

26. Viskosedämpfer nach einem oder mehreren der Ansprüche 17 bis 25, **dadurch gekennzeichnet,** daß auf der Mantelfläche des Endstücks (43a) mindestens eine Schlüsselfläche (48) vorhanden ist.

27. Viskosedämpfer nach einem oder mehreren der Ansprüche 1 bis 26, **dadurch gekennzeichnet,** daß der Stößelkopf relativ zum Stößel selbst in der Höhe verstellbar angeordnet ist und in einem Gehäuse (59) lagert, das am schwingenden Körper (67) befestigbar ist.

28. Viskosedämpfer nach Anspruch 27, **dadurch gekennzeichnet,** daß der Stößelkopf einen elastischen Pufferkörper (56) aufweist, der im Gehäuse (59) angeordnet ist und der mit dem Stößelkopf in der Höhe verstellbar ist, daß zum Boden (62) und zur Deckenwandung (60) des Gehäuses (59) ein Spalt (74 bzw. 73) eingestellt werden kann.

29. Viskosedämpfer nach Anspruch 27 und/oder 28, **dadurch gekennzeichnet,** daß der Pufferkörper (56) ellipsoidförmig ist und aus einem elastischen Material besteht.

30. Viskosedämpfer nach einem oder mehreren der Ansprüche 27 bis 29, **dadurch gekennzeichnet,** daß der Boden (62) des runden Gehäuses (59) ein Außengewinde (64) aufweist und in ein auf der Innenfläche des Mantels (61) des Gehäuses (59) angeordnetes Innengewinde (65) eingeschraubt ist, wobei das Innengewinde (65) breiter ist, als die Dicke des Bodens (62) beträgt.

31. Viskosedämpfer nach einem oder mehreren der Ansprüche 27 bis 30, **dadurch gekennzeichnet,** daß im Boden (62) ein zentrales Loch - (63) angeordnet ist, das vom verbreiterten Kopfstück (54) eines Gewindebolzens (50) durchgriffen wird, wobei der Gewindebolzen (50) in eine im Bolzen (29) zentral von oben eingebrachte Sackbohrung (49) eingeschraubt ist.

32. Viskosedämpfer nach Anspruch 31, **dadurch gekennzeichnet,** daß eine Kontermutter (51) gegen das Endstück (43a) des Bolzens (29) auf dem Gewinde des Gewindebolzens (50) sitzend geschraubt ist.

33. Viskosedämpfer nach Anspruch 32, **dadurch gekennzeichnet,** daß das aus der Kontermutter (51) nach oben herausragende Endstück des Gewindebolzens (50) mindestens eine Schlüsselfläche (53) aufweist.

34. Verwendung eines Viskosedämpfers nach einem oder mehreren der Ansprüche 1 bis 33 als Dämpfer z.B. zur Schwingungsisolierung von Werkzeugmaschinen, Schmiedehämmern, Pressen, Druckmaschinen, Aggregaten, Rohrleitungen.

35. Verwendung eines Viskosedämpfers nach einem oder mehreren der Ansprüche 1 bis 34 zur Schwingungsisolierung von Gebäuden für den Erdbebenfall.

Fig. 1

Fig. 2

Fig. 3.